# EUROPEAN PATENT SPECIFICATION

(11) **EP 0 885 258 B1**
(45) Date of publication and mention of the grant of the patent: **19.06.2002**
(21) Application number: 97908041.3
(22) Date of filing: 07.03.1997
(51) Int. Cl.: C08K 5/00, B32B 27/18, B65D 81/24

(54) **FUNCTIONAL BARRIER IN OXYGEN SCAVENGING FILM**
SELEKTIVE BARRIERE IN SAUERSTOFFAUFNEHMENDEM FILM
BARRIERE FONCTIONNELLE DANS UN FILM DESOXYGENANT

(30) Priority: 07.03.1996 US 13013 P
(43) Date of publication of application: 23.12.1998
(73) Proprietor: Cryovac, Inc., Duncan, SC 29334-0464 (US)
(72) Inventor: BANSLEBEN, Donald, A., Columbia, MD 21044 (US); BECRAFT, Michael, L., Woodstock, MD 21163 (US); BLINKA, Thomas, A., Columbia, MD 21044 (US); MIRANDA, Nathanael, R., Spartanburg, SC 29302, (US); SPEER, Drew, V., Columbia, MD 21044 (US)
(74) Representative: Senior, Alan Murray
(86) International application number: US9703528
(87) International publication number: WO9732925

(56) References cited:
- EP-A- 0 638 487
- EP-A- 0 698 563
- WO-A-96/08371
- US-A- 5 159 005
- US-A- 5 274 024

## Description

The invention generally relates to an article and method for scavenging by-products of an oxygen scavenging reaction.

It is well known that limiting the exposure of oxygen-sensitive products to oxygen maintains and enhances the quality and "shelf-life" of the product. In the food packaging industry, several means for regulating oxygen exposure have already been developed.

These means include modified atmosphere packaging (MAP) for modifying the interior environment of a package; gas flushing; vacuum packaging; vacuum packaging combined with the use of oxygen barrier packaging materials; etc. Oxygen barrier films and laminates reduce or retard oxygen permeation from the outside environment into the package interior.

Another method currently being used is through "active packaging." The inclusion of oxygen scavengers within the cavity or interior of the package is one form of active packaging. Typically, such oxygen scavengers are in the form of sachets which contain a composition which scavenges the oxygen through chemical reactions. One type of sachet contains iron compositions which oxidize. Another type of sachet contains unsaturated fatty acid salts on a particulate adsorbent. Yet another type of sachet contains a metal/polyamine complex as disclosed in WO88/06641.

One disadvantage of sachets is the need for additional packaging operations to add the sachet to each package. A further disadvantage arising from some sachets is that certain atmospheric conditions (e.g., high humidity, low CO₂ level) in the package are required in order for scavenging to occur at an adequate rate.

Another means for limiting the exposure to oxygen involves incorporating an oxygen scavenger into the packaging structure itself. This achieves a more uniform scavenging effect throughout the package. This may be especially important where there is restricted air circulation inside the package. In addition, such incorporation can provide a means of intercepting and scavenging oxygen as it passes through the walls of the package (herein referred to as an "active oxygen barrier"), thereby maintaining the lowest possible oxygen level throughout the package.

One attempt to prepare an oxygen-scavenging wall involves the incorporation of inorganic powders and/or salts. However, incorporation of these powders and/or salts causes degradation of the wall's transparency and mechanical properties such as tear strength. In addition, these compounds can lead to processing difficulties, especially in the fabrication of thin films, or thin layers within a film structure. Even further, the scavenging rates for walls containing these compounds are unsuitable for some commercial oxygen-scavenging applications, e.g. such as those in which sachets are employed.

Other efforts have been directed to incorporating a metal catalyst-polyamide oxygen scavenging system into the package wall. However, this system does not exhibit oxygen scavenging at a commercially feasible rate.

Oxygen scavengers suitable for commercial use in films of the present invention are disclosed in U.S. Patent No. 5,350,622, and a method of initiating oxygen scavenging generally is disclosed in U.S. Patent No 5,211,875. Both applications are incorporated herein by reference in their entirety. According to U.S. Patent No. 5,350,622, oxygen scavengers are made of an ethylenically unsaturated hydrocarbon and transition metal catalyst. The preferred ethylenically unsaturated hydrocarbon may be either substituted or unsubstituted. As defined herein, an unsubstituted ethylenically unsaturated hydrocarbon is any compound which possesses at least one aliphatic carbon-carbon double bond and comprises 100% by weight carbon and hydrogen. A substituted ethylenically unsaturated hydrocarbon is defined herein as an ethylenically unsaturated hydrocarbon which possesses at least one aliphatic carbon-carbon double bond and comprises about 50% - 99% by weight carbon and hydrogen. Preferable substituted or unsubstituted ethylenically unsaturated hydrocarbons are those having two or more ethylenically unsaturated groups per molecule. More preferably, it is a polymeric compound having three or more ethylenically unsaturated groups and a molecular weight equal to or greater than 1,000 weight average molecular weight.

Preferred examples of unsubstituted ethylenically unsaturated hydrocarbons include, but are not limited to, diene polymers such as polyisoprene, (e.g., trans-polyisoprene) and copolymers thereof, cis and trans 1,4-polybutadiene, 1,2-polybutadienes, (which are defined as those polybutadienes possessing greater than or equal to 50% 1,2 microstructure), and copolymers thereof, such as styrene-butadiene copolymer. Such hydrocarbons also include polymeric compounds such as polypentenamer, polyoctenamer, and other polymers prepared by cyclic olefin metathesis; diene oligomers such as squalene; and polymers or copolymers with unsaturation derived from dicyclopentadiene, norbornadiene, 5-ethylidene-2-norbornene, 5-vinyl-2-norbornene, 4-vinylcyclohexene, 1,7-octadiene, or other monomers containing more than one carbon-carbon double bond (conjugated or non-conjugated).

Preferred substituted ethylenically unsaturated hydrocarbons include, but are not limited to, those with oxygen-containing moieties, such as esters, carboxylic acids, aldehydes, ethers, ketones, alcohols, peroxides, and/or hydroperoxides. Specific examples of such hydrocarbons include, but are not limited to, condensation polymers such as polyesters derived from monomers containing carbon-carbon double bonds, and unsaturated fatty acids such as oleic, ricinoleic, dehydrated ricinoleic, and linoleic acids and derivatives thereof, e.g. esters. Such hydrocarbons also include polymers or copolymers derived from (meth)allyl (meth)acrylates. Suitable oxygen scavenging polymers can be made by trans-esterification. Such polymers are disclosed in WO 95/02616, incorporated herein by reference as if set forth in full. The composition used may also comprise a mixture of two or more of the substituted or unsubstituted ethylenically unsaturated hydrocarbons described above. While a weight average molecular weight of 1,000 or more is preferred, an ethylenically unsaturated hydrocarbon having a lower molecular weight is usable, provided it is blended with a film-forming polymer or blend of polymers.

As will also be evident, ethylenically unsaturated hydrocarbons which are appropriate for forming solid transparent layers at room temperature are preferred for scavenging oxygen in the packaging articles described above. For most applications where transparency is necessary, a layer which allows at least 50% transmission of visible light is preferred.

When making transparent oxygen-scavenging layers according to this invention, 1,2-polybutadiene is especially preferred for use at room temperature. For instance, 1,2-polybutadiene can exhibit transparency, mechanical properties and processing characteristics similar to those of polyethylene. In addition, this polymer is found to retain its transparency and mechanical integrity even after most or all of its oxygen uptake capacity has been consumed, and even when little or no diluent resin is present. Even further, 1,2-polybutadiene exhibits a relatively high oxygen uptake capacity and, once it has begun to scavenge, it exhibits a relatively high scavenging rate as well.

When oxygen scavenging at low temperatures is desired, 1,4-polybutadiene, and copolymers of styrene with butadiene, and styrene with isoprene are especially preferred. Such compositions are disclosed in U.S. Patent No. 5,310,497 issued to Speer et al. on May 10, 1994 and incorporated herein by reference as if set forth in full. In many cases it may be desirable to blend the aforementioned polymers with a polymer or copolymer of ethylene.

Other oxygen scavengers which can be used in connection with this invention are disclosed in U.S. Patent Nos. 5, 075,362 (Hofeldt et al.), 5, 106,886 (Hofeldt et al.), 5, 204,389 (Hofeldt et al.), and 5, 227,411 (Hofeldt et al.), all incorporated by reference herein in their entirety. These oxygen scavengers include ascorbates or isoascorbates or mixtures thereof with each other or with a sulfite, often sodium sulfite.

Still other oxygen scavengers which can be used in connection with this invention are disclosed in PCT patent publications WO 91/17044 (Zapata Industries), WO94/09084 (Aquanautics Corporation), and WO88/06641, all incorporated by reference herein in their entirety. These oxygen scavengers include an ascorbate with a transition metal catalyst, the catalyst being a simple metal or salt or a compound, complex or chelate of the transition metal; a transition metal complex or chelate of a polycarboxylic or salicylic acid, optionally with a reducing agent such as ascorbate, where the transition metal complex or chelate acts primarily as an oxygen scavenging composition; and a transition metal complex or chelate of a polyamine.

Yet other oxygen scavengers which can be used in connection with this invention are disclosed in PCT patent publication WO 94/12590 (Commonwealth Scientific and Industrial Research Organisation), incorporated by reference herein in its entirety. These oxygen scavengers include at least one reducible organic compound which is reduced under predetermined conditions, the reduced form of the compound being oxidizable by molecular oxygen, wherein the reduction and/or subsequent oxidation of the organic compound occurs independent of the presence of a transition metal catalyst. The reducible organic compound is preferably a quinone, a photoreducible dye, or a carbonyl compound which has absorbence in the UV spectrum.

Sulfites, alkali metal salts of sulfites, and tannins, are also contemplated as oxygen scavenging compounds.

As indicated above, the ethylenically unsaturated hydrocarbon is combined with a transition metal catalyst. While not being bound by any particular theory, the inventors observe that suitable metal catalysts are those which can readily interconvert between at least two oxidation states. See Sheldon, R. A.; Kochi, J. K.; "Metal-Catalyzed Oxidations of Organic Compounds" Academic Press, New York 1981.

Preferably, the catalyst is in the form of a transition metal salt, with the metal selected from the first, second or third transition series of the Periodic Table. Suitable metals include, but are not limited to, manganese II or III, iron II or III, cobalt II or III, nickel II or III, copper I or II, rhodium II, III or IV, and ruthenium II or III. The oxidation state of the metal when introduced is not necessarily that of the active form. The metal is preferably iron, nickel or copper, more preferably manganese and most preferably cobalt. Suitable counterions for the metal include, but are not limited to, chloride, acetate, stearate, palmitate, caprylate, linoleate, tallate, 2-ethylhexanoate, neodecanoate, oleate or naphthenate. Particularly preferable salts include cobalt (II) 2-ethylhexanoate, cobalt stearate, and cobalt (II) neodecanoate. The metal salt may also be an ionomer, in which case a polymeric counterion is employed. Such ionomers are well known in the art.

The ethylenically unsaturated hydrocarbon and transition metal catalyst can be further combined with one or more polymeric diluents, such as thermoplastic polymers which are typically used to form film layers in plastic packaging articles. In the manufacture of certain packaging articles well known thermosets can also be used as the polymeric diluent.

Polymers which can be used as the diluent include, but are not limited to, polyethylene terephthalate (PET), polyethylene, low or very low density polyethylene, ultra-low density polyethylene, linear low density polyethylene, polypropylene, polyvinyl chloride, polystyrene, and ethylene copolymers such as ethylene-vinyl acetate, ethylene-alkyl (meth)acrylates, ethylene-(meth)acrylic acid and ethylene-(meth)acrylic acid ionomers. Blends of different diluents may also be used. However, as indicated above, the selection of the polymeric diluent largely depends on the article to be manufactured and the end use. Such selection factors are well known in the art.

Further additives can also be included in the composition to impart properties desired for the particular article being manufactured. Such additives include, but are not necessarily limited to, fillers, pigments, dyestuffs, antioxidants, stabilizers, processing aids, plasticizers, fire retardants, anti-fog agents, etc.

The mixing of the components listed above is preferably accomplished by melt-blending at a temperature in the range of 50°C to 300°C. However alternatives such as the use of a solvent followed by evaporation may also be employed. The blending may immediately precede the formation of the finished article or preform or precede the formation of a feedstock or masterbatch for later use in the production of finished packaging articles.

Although these technologies offers great potential in packaging applications, it has been found that oxygen scavenging structures can sometimes generate reaction byproducts which can affect the taste and smell of the packaged material (i.e. organoleptic properties), or raise food regulatory issues. These by-products can include organic acids, aldehydes, ketones, and the like.

This problem can be minimised by the use of polymeric functional barriers. A polymeric functional barrier is a polymeric material which acts as a selective barrier to by-products from the oxygen scavenging reaction, but is not itself a significant barrier to oxygen. Functional barrier polyterpene blends are disclosed in WO 94/06626 to Balloni *et al.*

Polymeric functional barriers for oxygen scavenging applications are disclosed in WO 96/08371 to Ching *et al.* The materials in this case are high glass transition temperature (T_{g}) glassy polymers such as polyethylene terephthalate (PET) and nylon 6 that are preferably further oriented. Conversely, the inventors of this application have surprisingly found certain low T_{g} polymers and their blends to be useful functional barrier materials.

According to the invention the functional barrier polymers PETG and amorphous nylon can be incorporated into one or more layers of a multilayer film or container which includes an oxygen scavenging layer. However, one of ordinary skill in the art will readily recognize that the present invention is applicable to any oxygen scavenging system that produces by-products such as organic acids, aldehydes, ketones, and the like.

The functional barrier polymer(s) may further be blended with another polymer to modify the oxygen permeability as required by some applications.

In one aspect therefore, the invention provides a film comprising a first layer comprising an oxygen barrier; a second layer comprising an oxygen scavenger; and a third layer comprising a polymer selected from the group consisting of polyethylene terephthalate glycol (PETG) and amorphous nylon.

In a second aspect, the invention provides a package comprising an oxygen sensitive article; and a container into which the oxygen sensitive article is disposed, the container including a layer comprising an oxygen scavenger, a layer comprising a polymer selected from the group consisting of polyethylene terephthalate glycol (PETG) and amorphous nylon, and a layer comprising an oxygen barrier.

In a third aspect, the invention provides a method of making an article of manufacture having reduced migration of by-products of an oxygen scavenging reaction comprising providing an article comprising a layer comprising an oxygen scavenger, a layer comprising a polymer selected from the group consisting of polyethylene terephthalate glycol (PETG) and amorphous nylon, and a layer comprising an oxygen barrier; and exposing the article to actinic radiation.

In a fourth aspect, the invention provides an article in the form of a polymeric functional barrier coating on an oxygen scavenging lacquer, wherein the polymeric functional barrier coating comprises a polymer selected from the group consisting of polyethylene terephthalate glycol (PETG) and amorphous nylon.

In a fifth aspect, the invention provides an article in the form of a gasket, wherein the gasket comprises an oxygen scavenger, and a polymer selected from the group consisting of polyethylene terephthalate glycol (PETG) and amorphous nylon.

In certain applications of oxygen scavenging, it is desirable to achieve rapid scavenging of oxygen from the headspace of a package. In order to accomplish this, the functional barrier layer(s) must be relatively highly permeable to oxygen while maintaining functional barrier attributes (*i.e*., preventing the migration of small organic molecules). In these cases, it is preferred that the oxygen permeability of the functional barrier be greater than about 3,000 cc O₂ per m² per day per atmosphere (tested at 1 mil thick and at 25 °C), preferably greater than 5,000, more preferably greater than 8,000 and most preferably greater than 10,000 cc 02 per m² per day per atmosphere (tested at 1 mil thick and at 25 °C at ASTM D3985). The higher the permeability of the layer(s) interposed between the oxygen scavenger and the headspace of the package, the faster that oxygen can be scavenged from the headspace. The exact oxygen permeability required for a given application can readily be determined through experimentation by one skilled in the art. Higher oxygen permeability can readily be accomplished by blending the functional barrier polymer with any polymer which has a substantially higher oxygen permeability. Useful polymers for blending with functional barrier polymers include but are not limited to polymers and copolymers of alkyl acrylates, especially ethylene/butyl acrylate, ethylene/vinyl acetate copolymers, and the like.

"Film" herein means a film, laminate, sheet, web, coating, or the like which can be used to package a product.

"Oxygen scavenger" (OS) and the like herein means a composition, article or the like which consumes, depletes or reacts with oxygen from a given environment.

"Actinic radiation" herein means any form of radiation, such as ultraviolet radiation, or electron beam radiation, as disclosed in U.S. Patent No. 5.211,875 (Speer et al.).

"Functional barrier" herein means a polymeric material which acts as a selective barrier to by-products from the oxygen scavenging reaction but not to oxygen.

"LLDPE" herein means linear low density polyethylene, which is an ethylene/ alpha-olefin copolymer.

"EVOH" herein means ethylene/vinyl alcohol copolymer.

"EVA" herein means ethylene/vinyl acetate copolymer.

"Polymer" and the like herein means a homopolymer, but also copolymers thereof, including bispolymers, terpolymers, etc.

"Ethylene/alpha-olefin copolymer" and the like herein means such heterogeneous materials as linear low density polyethylene (LLDPE), linear medium density polyethylene (LMDPE) and very low and ultra low density polyethylene (VLDPE and ULDPE); and homogeneous polymers such as metallocene catalyzed polymers such as EXACT (TM) materials supplied by Exxon, and TAFMER (TM) materials supplied by Mitsui Petrochemical Corporation. These materials generally include copolymers of ethylene with one or more comonomers selected from C₄ to C₁₀ alpha-olefins such as butene-1 (i.e., 1-butene), hexene-1, octene-1, etc. in which the molecules of the copolymers comprise long chains with relatively few side chain branches or cross-linked structures. This molecular structure is to be contrasted with conventional low or medium density polyethylenes which are more highly branched than their respective counterparts. Other ethylene/a-olefin copolymers, such as the long chain branched homogeneous ethylene/a-olefin copolymers available from the Dow Chemical Company, known as AFFINITY (TM) resins, are also included as another type of ethylene alpha-olefin copolymer useful in the present invention. It is further contemplated that single-site catalyzed polyethylenes, known as Versipol™ (DuPont), will be useful in the present invention.

As used herein, the term "polyamide" refers to polymers having amide linkages along the molecular chain, and preferably to synthetic polyamides such as nylons. Furthermore, such term encompasses both polymers comprising repeating units derived from monomers, such as caprolactam, which polymerize to form a polyamide, as well as copolymers of two or more amide monomers, including nylon terpolymers, also referred to generally as "copolyamides" herein.

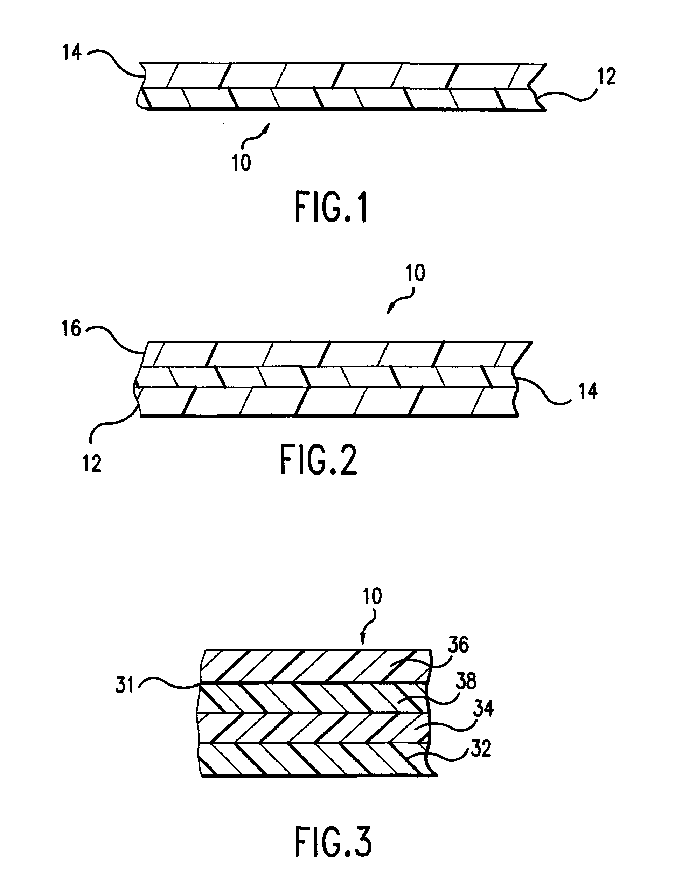

The invention may be understood with reference to the drawings wherein Figures 1 through 5 are schematic cross-sections of various embodiments of a film of the present invention.

The invention can be used to make gaskets; a polymeric functional barrier coating on an oxygen scavenging lacquer; and flexible films, all useful in packaging of food and non-food products.

It is known to use sealing compounds in the manufacture of gaskets for the rigid container market. Large, wide diameter gaskets are typically made using a liquid plastisol. This plastisol is a highly viscous, liquid suspension of polymer particles in a plasticizer. In the manufacture of metal or plastic caps, lids, and the like, this liquid plastisol is applied to the annulus of a container such as a jar, and the container with the applied plastisol is "fluxed" in an oven to solidify the plastisol into a gasket. The result is a gasket formed around the annulus of the container.

Smaller gaskets are typically made for use in beer crowns in bottles. A polymer melt is applied by cold molding to the entire inner surface of the crown. Both PVC and other polymers are used in this application.

Discs for plastic caps are typically made by taking a ribbon of gasket material and making discs, and inserting the discs into the plastic cap.

In all of these applications, the use of an oxygen scavenger and a polymeric functional barrier beneficially provides removal of oxygen from the interior environment of the container, while controlling undesirable by-products of the oxygen scavenging reaction.

Thus, a gasket includes an oxygen scavenger, and a polymeric functional barrier. The gasket adheres a metal or plastic lid or closure to a rigid or semi-rigid container, thus sealing the lid or closure to the container.

A lacquer for cans or other rigid or semi-rigid containers can contain an oxygen scavenging material, e.g. of the type described herein, and be coated with a polymeric functional barrier.

Film of the invention can been made by any conventional means, including coextrusion, lamination, extrusion coating, solution coating, or corona bonding, and then optionally irradiated and/or oriented. They can be made heat shrinkable through orientation or tenterframing if desired, at orientation ratios of 1:2 to 1:9 in either or both of the machine and transverse directions. For shrink applications, they can be made to have a free shrink of at least 10%, more preferably at least 20%, most preferably at least 30%, in either or both directions at 90°C. The polymeric functional barrier can be used in more than one layer of the multilayer film. Different polymeric functional barriers can be used in the same film. Although it is preferred that the polymeric functional barrier be used in the film and as a packaging material such that the polymeric functional barrier is disposed closer to the contents of the package, which can be food or any oxygen-sensitive product, than the oxygen scavenger, there may be applications where the polymeric functional barrier is disposed "outside of" the oxygen scavenger, such that the oxygen scavenger is disposed closer to the contents of the package than the polymeric functional barrier. The polymeric functional barrier can also be disposed on both sides of the oxygen scavenger.

Alternatively, the functional barrier, in addition to or instead of the arrangements described elsewhere herein, can be disposed in the same layer or layers as the oxygen scavenging material. Thus, by way of example, any of layers 14, 34, 44, and 54 of the examples and figures can include any suitable percent, by weight of the layer, of the functional barrier. Any suitable polymeric materials can be employed in films containing the functional barrier, and are not limited to those listed herein.

Polymeric functional barriers disclosed herein can thus be used beneficially with and in films and coatings, or absorbed into, or adsorbed onto, a variety of other supports for scavenging or other uses, such as a layer or coating on another object, or as a bottle cap or bottle liner, as an adhesive or non-adhesive insert, sealant, gasket, fibrous matte or other inserts, or as a non-integral component of a rigid, semi-rigid, or flexible container.

Referring to Figure 1, a multilayer film 10 is shown, having layer 12 and layer 14.

Figure 2 shows a multilayer film with layers 12, 14, and 16. Layers 12, 14, and 16 are preferably polymeric.

Layer 12 comprises a polymer selected from the group consisting of polyethylene terephthalate glycol (PETG) and, amorphous nylon. These materials can act as a functional barrier to the migration or extraction of by-products of an oxygen scavenging reaction occurring within the film.

Layer 14 comprises an oxygen scavenger, preferably a polymeric oxygen scavenger, more preferably one of the materials described above.

Layer 16 comprises an oxygen barrier material, such as ethylene/vinyl alcohol copolymer (EVOH), Saran (vinylidene chloride copolymer), polyester, polyamide, metal, etc.

Figure 3 shows a laminated film in which a three layer film is adhered to a second film. Layers 32, 34, and 36 correspond functionally and compositionally to 12, 14, and 16 respectively of Figure 2, and layer 38 is an intermediate layer which can comprise any polymeric material such as polyolefin, more preferably ethylenic polymers such as ethylene/alpha-olefin and ethylene/unsaturated ester copolymers, more preferably ethylene vinyl acetate copolymer. Layer 31 represents a conventional adhesive such as polyurethane adhesive. Comparative 2 in Table 6 exemplifies the laminated film of Figure 3.

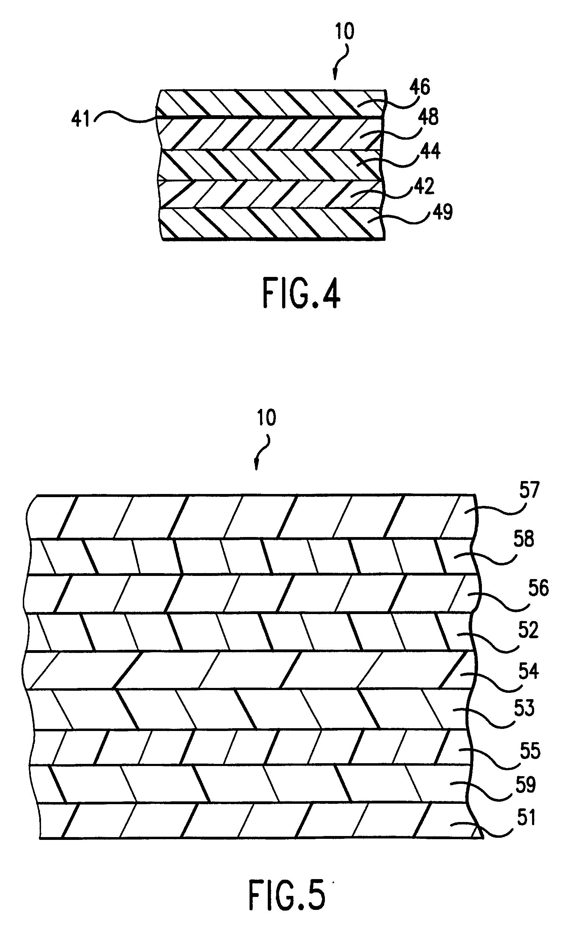

Figure 4 shows a laminated film in which a four layer film is adhered to a second film. Layers 42, 44, 46 and 48 correspond functionally and compositionally to layers 32, 34, 36 and 38 respectively of Figure 3. Layer 49 is an innermost heat sealable layer which can comprise any polymeric material such as polyolefin, more preferably ethylenic polymers such as ethylene/alpha-olefin and ethylene/unsaturated ester copolymers, such as ethylene vinyl acetate copolymer. Layer 46 provides oxygen barrier to the film structure, and adheres to layer 48 by means of conventional adhesive 41. This adhesive corresponds to layer 31 of Figure 3, and is shown simply as a thickened line. Examples 2 and 3 of Table 6 exemplify the laminated film of Figure 4.

Figure 5 shows a nine layer film. Example 1 and Comparative 1 in Table 2 exemplify the film of Figure 5.

Layer 57 is an abuse-resistant layer useful as an outermost layer of a film when used in a packaging application.

Layers 54 and 56 correspond functionally to layers 14 and 16 respectively of Figures 2 and 3, as well as to layers 44 and 46 respectively of Figure 4.

Layers 52, 53, 58 and 59 comprise an adhesive. The adhesive is preferably polymeric, more preferably acid or acid anhydride-grafted polyolefins. In addition, these layers can comprise a polymeric functional barrier of the type described for layer 12.

Layer 55 comprises a heat resistant material. This can be any suitable polymeric material, preferably an amide polymer such as nylon 6, or a polyester such as polyethylene terephthalate. Layer 55 can also comprise a polymeric functional barrier of the type described for layer 12.

Layer 51 comprises a heat sealable material. This can be any suitable polymeric material, preferably an olefinic polymer such as an ethylenic polymer, more preferably an ethylene/alpha olefin copolymer.

The invention may be further understood by reference to the examples shown below. Table 1 identifies the materials used in the examples.

**TABLE 1**

| MATERIAL | TRADENAME | SOURCE | DESCRIPTION |
|---|---|---|---|
| PE₁ | Dowlex™ 2244A | Dow | LLDPE, an ethylene/ 1-octene copolymer with a density of .917 gm/cc |
| PE₂ | Dowlex 3010 | Dow | LLDPE, an ethylene/ 1-octene copolymer with a density of 0.921 gm/cc |
| PE₃ | PE 1017 | Chevron | low density polyethylene |
| AB₁ | 10,075 ACP Syloid™ concentrate | Tecknor Color | 89.8% low density polyethylene (Exxon LD 203.48) + 10% synthetic amorphous silica (Syloid™ 74X6500 from Davison Chemical) + 0.2% calcium stearate |
| EV₁ | LD 318.92 | Exxon | ethylene vinyl acetate copolymer with 9% vinyl acetate comonomer |
| EV₂ | PE 1375 | Rexene | ethylene vinyl acetate copolymer with 3% vinyl acetate comonomer |
| EV₃ | AC-400A | Allied | ethylene vinyl acetate copolymer |
| AD₁ | Tymor™ 1203 | Morton International | anhydride-grafted LLDPE |
| AD₂ | Adcote 530 and Coreactant 9L23 | Morton International | mixture of silane, isocyanate, glycol, and alkyl acetate |
| OB₁ | LC-H101BD | Evalca | ethylene-vinyl alcohol copolymer with 38% ethylene comonomer |
| OS₁ | Vector 8508-D | Dexco | styrene-butadiene copolymer |
| OS₂ | RB-830 | JSR | 1,2-polybutadiene |
| OS₃ | VISTALON™ 3708 | Exxon | ethylene propylene diene terpolymer |
| PP₁ | Profax 6801 | Himont | polypropylene |
| PP₂ | Escorene PD3345.E5 | Exxon | polypropylene |
| PEC₁ | Escorene PD9302.E1 | Exxon | propylene-ethylene copolymer with 3% ethylene comonomer |
| PT₁ | Piccolyte C135 | Hercules | polyterpene |
| EM₁ | SP2260 | Chevron | ethylene methyl acrylate copolymer with 24% methyl acrylate comonomer |
| EM₂ | Bynel E403 | DuPont | adhesive resin based on ethylene-methyl acrylate-methacrylic acid terpolymer |
| EB₁ | EA-719.009 | Quantum | ethylene-butyl acrylate with 18% butyl acrylate comonomer |
| EB₂ | Lotryl 30BA02 | Atochem | ethylene-butyl acrylate with 30% butyl acrylate comonomer |
| EMAA₁ | Nucrel 1202 | DuPont | ethylene-methacrylic acid copolymer with 12% methacrylic acid |
| EAA₁ | Primacor 1410 | Dow | ethylene-acrylic acid copolymer with 9.5% acrylic acid |
| ION₁ | DS-3088 | Chevron | ionomer based on ethyl- |
| | | | ene-methyl acrylate copolymer |
| ION₂ | DS-3076 | Chevron | ionomer based on ethylene-methyl acrylate copolymer |
| ION₃ | SURLYN™1650 | DuPont | ionomer |
| ION₄ | SURLYN™1707 | DuPont | ionomer |
| PA₁ | Ultramid™ KR 4407-F | BASF | nylon 6 (polycaprolactam) |
| PA₂ | Capron™ 7007 | Allied Signal | a blend of 70% nylon 6 and 30% amorphous nylon having hexamethylene diamine, terephthalic acid, and isophthalic acid moieties |
| PA₃ | 6763 | Eastman | polyethylene terephthalate glycol |
| PI₁ | benzophenone | Sartomer | photoinitiator |
| PI₂ | benzoylbiphenyl | | photoinitiator |
| CAT₁ | cobalt oleate | Shepherd | a transition metal catalyst |
| CAT₂ | TENCEM™ 170 | OMG | cobalt neodecanoate, a transition metal catalyst |
| F₁ | 50m-44 Mylar™ | DuPont | saran-coated polyethylene terephthalate film |

Certain materials were blended together for some of the film structures, and these blends are identified as follows:
OSB₃ = 76.5% OS₂ + 13.5% OS₃ + 9.2% EV₁ + 0.5% PI₁ + 0.3% CAT₂
PEB₂ = 90% PE₂ + 10% AB₁.
IONB₁ = 90% ION₃ +10% AB₁.

In Table 2, three nine- layer film structures in accordance with the invention, and a comparative example, are disclosed. These were each made by a coextrusion of the layers.

**TABLE 2**

| EXAMPLE | STRUCTURE |
|---|---|
| COMP. 1 | PEB₂/AD₁/OB₁/AD₁/OSB₃/AD₁/PA₁/AD₁/ PEB₂ |
| COMP 2 | IONB₁/AD₁/OB₁/AD₁/OSB₃/ AD₁/PA₁/ AD₁/ IONB₁ |
| 1 | IONB₁/AD₁/OB₁/AD₁/OSB₃/AD₁/PA₂/AD₁/IONB₁ |
| 2. | IONB₁/AD₁/OB₁/AD₁/OSB₃/AD₁/PA₃/AD₁/IONB₁ |

The target (and approximate actual) gauge (in mils) of each layer of the nine-layer film structures is shown below. Layer 9 would preferably form the food or product contact layer in a typical packaging application.

| layer 1 | layer 2 | layer 3 | layer 4 | layer 5 | layer 6 | layer 7 | layer 8 | layer 9 |
|---|---|---|---|---|---|---|---|---|
| 1.35 | 0.34 | 0.50 | 0.25 | 1.00 | 0.25 | 1.50 | 0.34 | 1.35 |

The films of Examples 1 and 2 and Comparative 1 and 2 were subjected to food law migration tests to evaluate whether functional barriers could reduce the concentration of extractables. The films were triggered by ultraviolet light according to the procedure disclosed in U.S. Patent No 5,211,875. The films were converted into 280 cm² pouches and the pouches were filled with the food simulant. The filled pouches were then retorted at 100°C for 30 minutes and stored at 50°C for 10 days. The food simulant was decanted from the pouches and analyzed. Table 3 shows a list of potential extractables. Table 4 shows the concentration of the same extractables, where the films were extracted with 8% ethanol solution. Table 5 shows the concentration of the same extractables, where the films were extracted with water. In both Tables 4 and 5, the concentration of each extractable is in units of nanograms/milliliter. Functional barriers such as polyethylene terephthalate glycol and amorphous nylon can reduce the concentration of certain extractables which could cause regulatory issues.

**TABLE 3**

| ABBREVIATION | DESCRIPTION |
|---|---|
| E₁ | acetaldehyde |
| E₂ | acetone |
| E₃ | formaldehyde |
| E₄ | benzophenone |
| E₅ | triphenylphosphine oxide |
| E₆ | Permanax™ WSP (antioxidant)* |
| E₇ | dilaurylthiodipropionate |
| E₈ | cobalt |

| | |
|---|---|
| * E₃ = 2,2'-methylene bis (4-ethyl-6-(1-methylcyclohexyl)phenol). | |

**TABLE 4**

| EX. | E₁ | E₂ | E₃ | E₄ | E₅ | E₆ | E₇ | E₈ |
|---|---|---|---|---|---|---|---|---|
| COMP. 1 | 195 | <50 | 160 | 109 | <50 | <90 | <62 | <50 |
| COMP. 2. | 177 | <50 | 166 | 53 | <50 | <90 | <62 | <50 |
| 1. | 145 | <50 | <50 | 68 | <50 | <90 | <62 | <50 |
| 2. | 69 | <50 | <50 | <50 | <50 | <90 | <62 | <50 |

**TABLE 5**

| EX. | E₁ | E₂ | E₃ | E₄ | E₅ | E₆ | E₇ | E₈ |
|---|---|---|---|---|---|---|---|---|
| COMP. 1 | 84 | <50 | 106 | <50 | <50 | <90 | <93 | <50 |
| COMP 2 | 58 | <50 | 92 | <50 | <50 | <90 | <93 | <50 |
| 1 | <50 | <50 | 77 | <50 | <50 | <90 | <93 | <50 |
| 2 | 58 | <50 | 63 | <50 | <50 | <90 | <93 | <50 |

## Claims

1. A film comprising:
a) a first layer comprising an oxygen barrier;
b) a second layer comprising an oxygen scavenger; and
c) a third layer comprising a polymer selected from the group consisting of polyethylene terephthalate glycol (PETG) and amorphous nylon.

2. A film according to claim 1 wherein the oxygen scavenger comprises a material selected from the group consisting of:
i) an oxidizable compound and a transition metal catalyst,
ii) an ethylenically unsaturated hydrocarbon and a transition metal catalyst,
iii) ascorbate,
iv) isoascorbate,
v) sulfite,
vi) ascorbate with a transition metal catalyst, the catalyst comprising a simple metal or salt, or a compound, complex or chelate of the transition metal,
vii) a transition metal complex or chelate of a polycarboxylic acid, salicylic acid, or polyamine,
viii) a reduced form of a quinone, a photoreducible dye, or a carbonyl compound which has absorbence in the UV spectrum, and
ix) tannin.

3. A film according to claim 1 or 2 further comprising an abuse resistant layer.

4. A film according to any one of the preceding claims further comprising a heat sealable layer.

5. A film according to any one of the preceding claims further comprising an intermediate adhesive layer disposed between the abuse resistant layer and oxygen barrier layer, between the oxygen barrier layer and the layer comprising the oxygen scavenger, between the layer comprising the oxygen scavenger and the layer comprising the heat sealable layer, or between the layer comprising the oxygen barrier layer and the heat sealable layer.

6. A film according to any one of the preceding claims which is cross-linked.

7. A film according to any one of the preceding claims which is oriented.

8. A film according to any one of the preceding claims which is heat shrinkable.

9. A film according to any one of the preceding claims wherein at least one of the polymers selected from the group consisting of polyethylene terephthalate glycol (PETG) and amorphous nylon is blended with a polymer selected from the group consisting of a polymer derived from alkyl acrylate monomer, and a polymer derived from vinyl acetate monomer.

10. A film according to any one of the preceding claims wherein the layer formed from at least one of the polymers selected from the group consisting of polyethylene terephthalate glycol (PETG) and amorphous nylon, has an oxygen permeability of greater than 5,000 cc-mil per sq. meter per day per atmosphere at 25 ° C.

11. A package comprising:
a) an oxygen sensitive article; and
b) a container into which the oxygen sensitive article is disposed, the container including:
i) a layer comprising an oxygen scavenger,
ii) a layer comprising a polymer selected from the group consisting of polyethylene terephthalate glycol (PETG) and amorphous nylon, and
iii) a layer comprising an oxygen barrier.

12. A method of making an article of manufacture having reduced migration of by-products of an oxygen scavenging reaction comprising:
a) providing an article comprising:
i) a layer comprising an oxygen scavenger,
ii) a layer comprising a polymer selected from the group consisting of polyethylene terephthalate glycol (PETG) and amorphous nylon, and
iii) a layer comprising an oxygen barrier; and
b) exposing the article to actinic radiation.

13. An article in the form of a polymeric functional barrier coating on an oxygen scavenging lacquer, wherein the polymeric functional barrier coating comprises a polymer selected from the group consisting of polyethylene terephthalate glycol (PETG) and amorphous nylon.

14. An article in the form of a gasket, wherein the gasket comprises an oxygen scavenger, and a polymer selected from the group consisting of polyethylene terephthalate glycol (PETG) and amorphous nylon.

15. An article according to claim 13 or 14 wherein the oxygen scavenger comprises a material selected from the group consisting of:
i) an oxidizable compound and a transition metal catalyst,
ii) an ethylenically unsaturated hydrocarbon and a transition metal catalyst,
iii) ascorbate,
iv) isoascorbate,
v) sulfite,
vi) ascorbate with a transition metal catalyst, the catalyst comprising a simple metal or salt, or a compound, complex or chelate of the transition metal,
vii) a transition metal complex or chelate of a polycarboxylic acid, salicylic acid, or polyamine,
viii) a reduced form of a quinone, a photoreducible dye, or a carbonyl compound which has absorbence in the UV spectrum, and
ix) tannin.

## Patentansprüche

1. Folie, umfassend:
a) eine erste Schicht, die eine Sauerstoffsperre umfasst;
b) eine zweite Schicht, die ein Sauerstoffabfangmittel umfasst; und
c) eine dritte Schicht, die ein Polymer ausgewählt aus der Gruppe bestehend aus Polyethylenterephthalatglykol (PETG) und amorphem Nylon umfasst.

2. Folie nach Anspruch 1, bei der das Sauerstoffabfangmittel Material ausgewählt aus der Gruppe bestehend aus:
i) oxidierbarer Verbindung und Übergangsmetallkatalysator,
ii) ethylenisch ungesättigtem Kohlenwasserstoff und Übergangsmetallkatalysator,
iii) Ascorbat,
iv) Isoascorbat,
v) Sulfit,
vi) Ascorbat mit Übergangsmetallkatalysator, wobei der Katalysator ein einfaches Metall oder Salz oder eine Verbindung, einen Komplex oder ein Chelat des Übergangsmetalls umfasst,
vii) Übergangsmetallkomplex oder Übergangsmetallchelat von Polycarbonsäure, Salicylsäure oder Polyamin,
viii) reduzierter Form eines Chinons, eines photoreduzierbaren Farbstoffs oder einer Carbonylverbindung, die Extinktion im UV-Spektrum aufweist, und
ix) Tannin
umfasst.

3. Folie nach Anspruch 1 oder 2, die ferner eine Schutzschicht umfasst.

4. Folie nach einem der vorhergehenden Ansprüchen, die ferner eine heißsiegelbare Schicht umfasst.

5. Folie nach einem der vorhergehenden Ansprüche, die ferner eine Klebezwischenschicht umfasst, die zwischen der Schutzschicht und der Sauerstoffsperrschicht, zwischen der Sauerstoffsperrschicht und der Schicht, die das Sauerstoffabfangmittel umfasst, zwischen der Schicht, die das Sauerstoffabfangmittel umfasst, und der Schicht, die die heißsiegelbare Schicht umfasst, oder zwischen der Schicht, die die Sauerstoffsperrschicht und die heißsiegelbare Schicht umfasst, angeordnet ist.

6. Folie nach einem der vorhergehenden Ansprüche, die vernetzt ist.

7. Folie nach einem der vorhergehenden Ansprüche, die orientiert ist.

8. Folie nach einem der vorhergehenden Ansprüche, die wärmeschrumpfbar ist.

9. Folie nach einem der vorhergehenden Ansprüche, bei der mindestens eines der Polymere ausgewählt aus der Gruppe bestehend aus Polyethylenterephthalatglykol (PETG) und amorphem Nylon mit einem Polymer ausgewählt aus der Gruppe bestehend aus von Alkylacrylatmonomer abgeleitetem Polymer und von Vinylacetatmonomer abgeleitetem Polymer gemischt ist.

10. Folie nach einem der vorhergehenden Ansprüche, bei dem die aus mindestens einem der Polymere ausgewählt aus der Gruppe. bestehend aus Polyethylenterephthalatglykol (PETG) und amorphem Nylon gebildete Schicht eine Sauerstoffdurchlässigkeit bei 25°C von mehr als 5 000 cm³/25,4 µm (1 mil) pro m² pro Tag pro Atmosphäre aufweist.

11. Verpackung, umfassend:
a) einen sauerstoffempfindlichen Gegenstand und
b) einen Behälter, in dem der sauerstoffempfindliche Gegenstand angeordnet ist, wobei der Behälter einschließt:
i) eine Schicht, die Sauerstoffabfangmittel umfasst,
ii) eine Schicht, die ein Polymer ausgewählt aus der Gruppe bestehend aus Polyethylenterephthalatglykol (PETG) und amorphem Nylon umfasst, und
iii) eine Schicht, die eine Sauerstoffsperre umfasst.

12. Verfahren zur Herstellung eines Fertigungsgegenstands mit verringerter Migration von Nebenprodukten einer Sauerstoffabfangreaktion, umfassend:
a) Bereitstellen eines Gegenstands, umfassend:
i) eine Schicht, die Sauerstoffabfangmittel umfasst,
ii) eine Schicht, die ein Polymer ausgewählt aus der Gruppe bestehend aus Polyethylenterephthalatglykol (PETG) und amorphem Nylon umfasst, und
iii) eine Schicht, die eine Sauerstoffsperre umfasst, und
b) Einwirken von aktinischer Strahlung auf den Gegenstand.

13. Gegenstand in Form einer polymeren funktionalen Sperrbeschichtung auf einem Sauerstoffabfanglack, wobei die polymere funktionale Beschichtung ein Polymer ausgewählt aus der Gruppe bestehend aus Polyethylenterephthalatglykol (PETG) und amorphem Nylon umfasst.

14. Gegenstand in Form einer Dichtung, wobei die Dichtung ein Sauerstoffabfangmittel und ein Polymer ausgewählt aus der Gruppe bestehend aus Polyethylenterephthalatglykol (PETG) und amorphem Nylon umfasst.

15. Gegenstand nach Anspruch 13 oder 14, bei dem das Sauerstoffabfangmittel Material ausgewählt aus der Gruppe bestehend aus
i) oxidierbarer Verbindung und Übergangsmetallkatalysator,
ii) ethylenisch ungesättigtem Kohlenwasserstoff und Übergangsmetallkatalysator,
iii) Ascorbat,
iv) Isoascorbat,
v) Sulfit,
vi) Ascorbat mit Übergangsmetallkatalysator, wobei der Katalysator ein einfaches Metall oder Salz oder eine Verbindung, einen Komplex oder ein Chelat des Übergangsmetalls umfasst,
vii) Übergangsmetallkomplex oder Übergangsmetallchelat von Polycarbonsäure, Salicylsäure oder Polyamin,
viii) reduzierter Form eines Chinons, eines photoreduzierbaren Farbstoffs oder einer Carbonylverbindung, die Extinktion im UV-Spektrum aufweist, und
ix) Tannin
umfasst.

## Revendications

1. Film comprenant :
a) une première couche comprenant une barrière à l'oxygène ;
b) une deuxième couche comprenant un piégeur d'oxygène ; et
c) une troisième couche comprenant un polymère choisi dans l'ensemble constitué par le poly(téréphtalate d'éthylèneglycol) (PETG) et le nylon amorphe.

2. Film selon la revendication 1, dans lequel le piégeur d'oxygène comprend un matériau choisi dans l'ensemble constitué par :
i) un composé oxydable et un catalyseur à base de métal de transition,
ii) un hydrocarbure à insaturation éthylénique et un catalyseur à base de métal de transition,
iii) un ascorbate,
iv) un isoascorbate,
v) un sulfite,
vi) un ascorbate avec un catalyseur à base de métal de transition, le catalyseur comprenant un métal simple ou un sel, ou un composé, complexe ou chélate du métal de transition,
vii) un complexe ou chélate de métal de transition avec un acide polycarboxylique, l'acide salicylique, ou une polyamine,
viii)une forme réduite d'une quinone, un colorant photoréductible, ou un composé carbonyle qui présente une absorbance dans le spectre UV, et
ix) un tannin.

3. Film selon la revendication 1 ou 2, comprenant en outre une couche résistant aux mauvais traitements.

4. Film selon l'une quelconque des revendications précédentes, comprenant en outre une couche thermoscellable.

5. Film selon l'une quelconque des revendications précédentes, comprenant en outre une couche adhésive intermédiaire disposée entre la couche résistant aux mauvais traitements et la couche barrière à l'oxygène, entre la couche barrière à l'oxygène et la couche comprenant le piégeur d'oxygène, entre la couche comprenant le piégeur d'oxygène et la couche comprenant la couche thermoscellable, ou entre la couche comprenant la couche barrière à l'oxygène et la couche thermoscellable.

6. Film selon l'une quelconque des revendications précédentes, qui est réticulé.

7. Film selon l'une quelconque des revendications précédentes, qui est orienté.

8. Film selon l'une quelconque des revendications précédentes, qui est thermorétractable.

9. Film selon l'une quelconque des revendications précédentes, dans lequel au moins l'un des polymères choisis dans l'ensemble constitué par le poly(téréphtalate d'éthylène glycol) (PETG) et le nylon amorphe est mélangé avec un polymère choisi dans l'ensemble constitué par un polymère dérivant de monomère acrylate d'alkyle, et un polymère dérivant de monomère acétate de vinyle.

10. Film selon l'une quelconque des revendications précédentes, dans lequel la couche formée à partir d'au moins l'un des polymères choisis dans l'ensemble constitué par le poly(téréphtalate d'éthylène glycol) (PETG) et le nylon amorphe a une perméabilité à l'oxygène supérieure à 5 000 cm³-mil par mètre carré par jour par atmosphère à 25°C.

11. Emballage comprenant :
a) un article sensible à l'oxygène ; et
b) un récipient dans lequel l'article sensible à l'oxygène est disposé, le récipient comprenant :
i) une couche comprenant une barrière à l'oxygène ;
ii) une couche comprenant un polymère choisi dans l'ensemble constitué par le poly(téréphtalate d'éthylèneglycol) (PETG) et le nylon amorphe, et
iii) une couche comprenant une barrière à l'oxygène.

12. Procédé pour préparer un article manufacturé ayant une migration réduite de sous-produits d'une réaction de piégeage d'oxygène, comprenant :
a) la disposition d'un article comprenant :
i) une couche comprenant une barrière à l'oxygène ;
ii) une couche comprenant un polymère choisi dans l'ensemble constitué par le poly(téréphtalate d'éthylèneglycol) (PETG) et le nylon amorphe, et
iii) une couche comprenant une barrière à l'oxygène ; et
b) l'exposition de l'article à un rayonnement actinique.

13. Article sous la forme d'un revêtement formant barrière fonctionnelle polymère sur un vernis piégeant l'oxygène, dans lequel le revêtement formant barrière fonctionnelle polymère comprend un polymère choisi dans l'ensemble constitué par le poly(téréphtalate d'éthylèneglycol) (PETG) et le nylon amorphe.

14. Article sous la forme d'un joint, dans lequel le joint comprend un piégeur d'oxygène, et un polymère choisi dans l'ensemble constitué par le poly(téréphtalate d'éthylèneglycol) (PETG) et le nylon amorphe.

15. Article selon la revendication 13 ou 14, dans lequel le piégeur d'oxygène comprend un matériau choisi dans l'ensemble constitué par :
i) un composé oxydable et un catalyseur à base de métal de transition,
ii) un hydrocarbure à insaturation éthylénique et un catalyseur à base de métal de transition,
iii) un ascorbate,
iv) un isoascorbate,
v) un sulfite,
vi) un ascorbate avec un catalyseur à base de métal de transition, le catalyseur comprenant un métal simple ou un sel, ou un composé, complexe ou chélate du métal de transition,
vii) un complexe ou chélate de métal de transition avec un acide polycarboxylique, l'acide salicylique, ou une polyamine,
viii)une forme réduite d'une quinone, un colorant photoréductible, ou un composé carbonyle qui présente une absorbance dans le spectre UV, et
ix) un tannin.
